# EUROPEAN PATENT SPECIFICATION

(11) **EP 3 416 396 B1**
(45) Date of publication and mention of the grant of the patent: **24.11.2021**
(21) Application number: 17750112.9
(22) Date of filing: 30.01.2017
(51) Int. Cl.: H04N 21/437, H04N 21/239, H04N 21/643, H04N 21/2343, H04N 21/24, H04N 21/262, H04N 21/2662, H04N 21/442, H04N 21/462, H04N 21/658, H04N 21/845

(54) **INFORMATION PROCESSING DEVICE AND INFORMATION PROCESSING METHOD**
INFORMATIONSVERARBEITUNGSVORRICHTUNG UND INFORMATIONSVERARBEITUNGSVERFAHREN
DISPOSITIF ET PROCÉDÉ DE TRAITEMENT D'INFORMATIONS

(30) Priority: 12.02.2016 JP 2016024809
(43) Date of publication of application: 19.12.2018
(73) Proprietor: Sony Group Corporation, Tokyo 108-0075 (JP)
(72) Inventor: TAKABAYASHI, Kazuhiko, Tokyo 108-0075 (JP); YAMAGISHI, Yasuaki, Tokyo 108-0075 (JP)
(74) Representative: D Young & Co LLP
(86) International application number: PCT/JP2017/003177
(87) International publication number: WO 2017/138387

(56) References cited:
- WO-A1-2015/121342
- WO-A1-2015/121342
- WO-A2-2015/004276
- JP-A- 2014 511 580
- JP-A- 2014 527 745
- US-A1- 2016 028 646
- Information technology - Dynamic adaptive streaming Over HTTP (DASH) - Part 1: Media presentation description and segment formats, 1 April 2012 (2012-04-01), pages 14-33,57-58,92- 96 , 114-115,

## Description

### [Technical Field]

The present disclosure relates to an information processing apparatus and an information processing method and particularly relates to an information processing apparatus and an information processing method that enable efficient transmission of an initialization file of a content possessing a predetermined attribute among a plurality of attributes.

### [Background Art]

In dynamic adaptive streaming under MPEG-DASH (Moving Picture Experts Group phase-Dynamic Adaptive Streaming over HTTP), a server prepares segment files of motion video contents possessing different attributes for every media type and an MPD (Media Presentation Description) file that manages the segment files for every media type and for every attribute.

It is noted that media types are kinds of motion video contents, which include video, subtitles, and audio, and attribute kinds include an encoding bitrate, a language, a role (purpose), a video resolution and a video frame rate, and an audio sampling rate and the number of audio channels. The MPD file includes attribute information that indicates each attribute, URLs (Uniform Resource Locators) of segment files possessing each attribute, and the like for every media type.

A client acquires an MPD file from a server and transmits to the server URLs of segment files possessing a predetermined attribute for every media type on the basis of the MPD file, thereby acquiring the segment files.

Under the current MPEG-DASH, a communication protocol between the client and the server is HTTP (HyperText Transfer Protocol) 1.1. Basically, therefore, the server transmits data as a response to a request from the client.

Specifically, the client transmits, to the server, an HTTP GET request to request the server to transmit an MPD file, and the server transmits, to the client, the MPD file at an URL assigned in this HTTP GET request as an HTTP GET response.

Next, the client sequentially transmits in initialization segment file units, to the server, an HTTP GET request to request the server to transmit each of initialization segment files (Initialization Segments) among segment files possessing one or more attributes for every media type on the basis of the received MPD file. The server then sequentially transmits, to the client, each of the initialization segment files at a URL assigned in this HTTP GET request as an HTTP GET response.

Furthermore, the client selects one attribute from among the attributes that correspond to the initialization segment files for every media type on the basis of an effective network bandwidth or the like. The client then sequentially transmits in media segment file units, to the server, an HTTP GET request to request the server to transmit each of media segment files among the segment files possessing the selected attribute. The server sequentially transmits, to the client, each of the media segment files at a URL assigned in this HTTP GET request as an HTTP GET response, and the client sequentially accumulates the received media segment files in a receiving buffer.

At this time, the client measures a reception speed of each media segment file (for example, a ratio of time required to receive data to reproduction time of the received data). The client uses the measured reception speed for selection of an encoding bitrate of the next media segment file as an attribute thereof for every media type.

As described so far, for the client to receive the initialization segment files (media segment files), it is necessary to transmit the HTTP GET request and receive the HTTP GET response for every initialization segment file (for every media segment file). This results in high overhead.

Meanwhile, HTTP/2 was released by the IETF (Internet Engineering Task Force) on May 2015 as a succeeding version of HTTP1.1 (refer to, for example, NPL 1). HTTP/2 enables multiplex communication, header compression, request and response pipelining, and the like while maintaining complete backward compatibility with HTTP1.1.

Furthermore, the WebSocket protocol was released by the IETF as a protocol that enables HTTP-based multiplex communication (two-way communication) on December 2011 before the release of HTTP/2 (refer to, for example, NPL 2). It is noted that the multiplex communication is a communication in which a server transmits not only a response to a request from a client but also data that does not respond to any request.

Against the backdrop, the MPEG is currently considering improving streaming efficiency by adopting the HTTP/2 or WebSocket protocol that is a full-duplex communication protocol as a communication protocol between a client and a server under the MPEG-DASH.

### [Citation List]

US 2016/0028646 A1 relates generally to network quality estimation using HTTP /2 push feature. When network quality estimation is required, a client web application requests a server to enter a probing mode. During the probing mode, the server pushes useful data to the application for the latter to perform the estimation. This avoids wasting bandwidth since the useful data are likely to be used by the application. Furthermore, during the probing mode, the server notifies the application of the push start and the push end of each pushed data. This is one using a web socket established with the application. This makes it possible to overcome the limitations of the application in accessing HTTP/2 features of a client browser. Based on the notifications, the application is able to perform accurate estimations.

WO 2015/004276 A1 describes an adaptive data streaming method with push messages control, in which a client prepares a request to download a manifest, and adds through HTTP headers some preferences on the video resolution, codecs, bandwidth it supports. The client then sends its request to the server.

### [Non Patent Literature]

[NPL 1]
   Hypertext Transfer Protocol Version 2 (HTTP/2), May 2015, Internet <URL: https://tools.ietf.org/html/rfc7540>
[NPL 2]
   The WebSocket Protocol, December 2011, Internet <URL: https://tools.ietf.org/html/rfc6455>

### [Summary]

### [Technical Problem]

However, efficient transmission of the initialization segment file of a motion video content possessing a predetermined attribute among a plurality of attributes has not been conceived of.

The present disclosure has been achieved in the light of such circumstances, and an object of the present disclosure is to enable efficient transmission of an initialization file of a content possessing a predetermined attribute among a plurality of attributes.

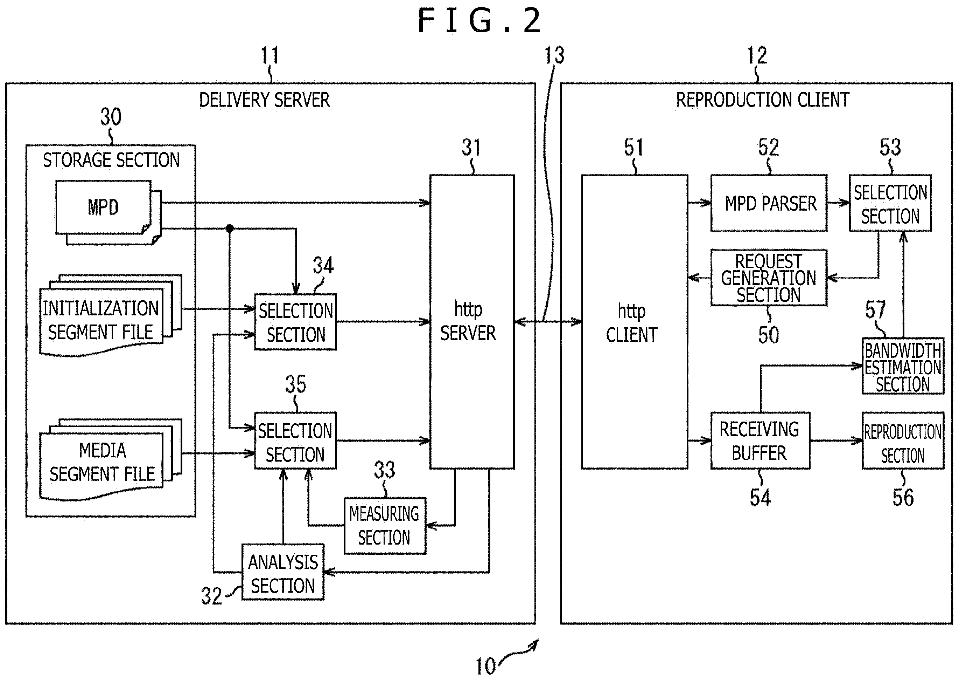

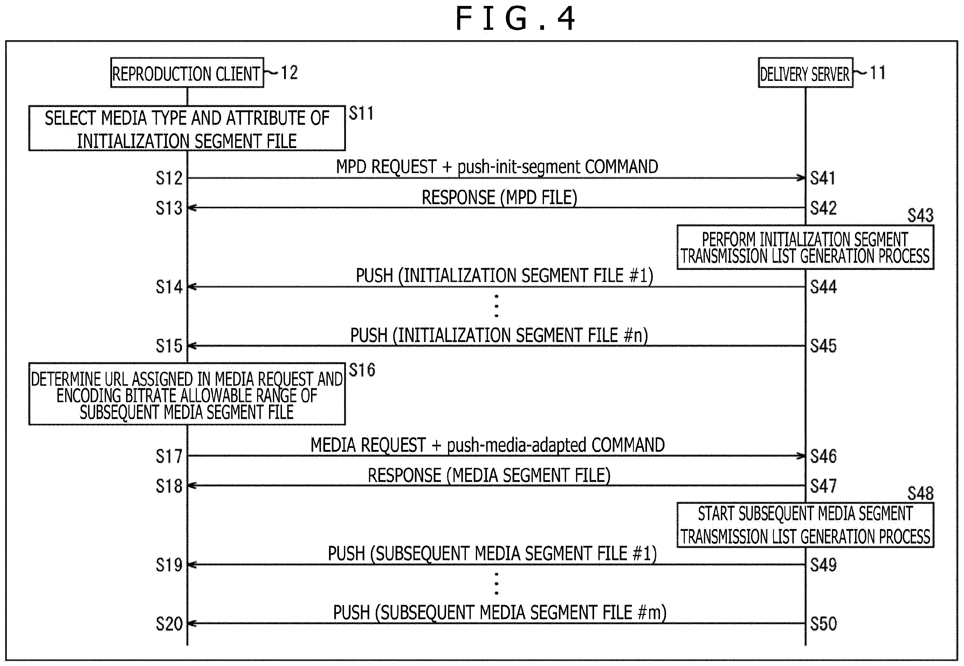

The present invention is as defined by the appended independent claims, which find support in pars 92-112, and figures 2 and 4. The remaining embodiments described in the description are to be construed within the limitations of the independent claims.

### [Solution to Problem]

Particular and preferred embodiments of the present invention are described in the claims.

### [Advantageous Effects of Invention]

According to the first aspect of the present disclosure, it is possible to issue a request to transmit data. Furthermore, according to the first aspect of the present disclosure, it is possible to efficiently issue a request to transmit an initialization file of a content possessing a predetermined attribute among a plurality of attributes.

Moreover, according to the second aspect of the present disclosure, it is possible to send data. Furthermore, according to the second aspect of the present disclosure, it is possible to efficiently transmit an initialization file of a content possessing a predetermined attribute among a plurality of attributes.

It is noted that effects are not always limited to those described here but may be any of effects described in the present disclosure.

### [Brief Description of Drawings]

[Fig. 1]

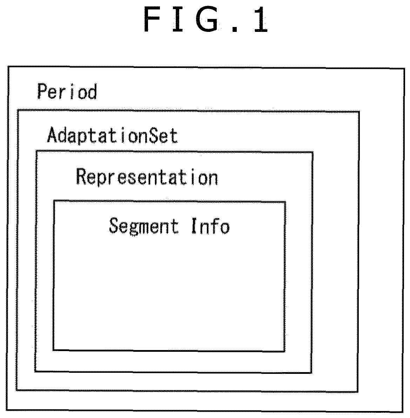

   Fig. 1 is an illustrative diagram of a hierarchical structure of an MPD file under MPEG-DASH.
[Fig. 2]
   Fig. 2 is a block diagram illustrating an example of a configuration of a first embodiment of an information processing system to which the present disclosure is applied.
[Fig. 3]

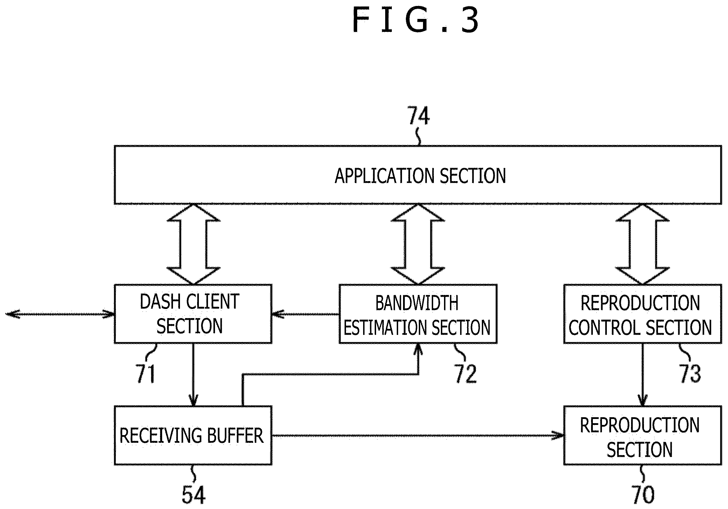

   Fig. 3 illustrates an example of a hierarchical structure of software of a reproduction client of Fig. 2.
[Fig. 4]
   Fig. 4 is a flowchart for describing processes performed by the information processing system of Fig. 2.
[Fig. 5]

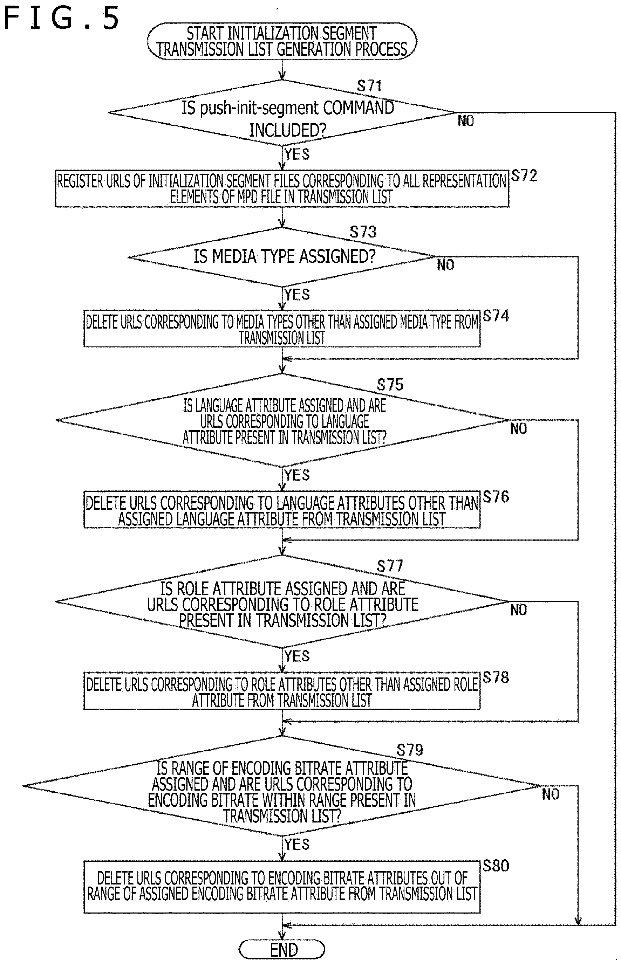

   Fig. 5 is a flowchart for describing details of an initialization segment transmission list generation process.
[Fig. 6]

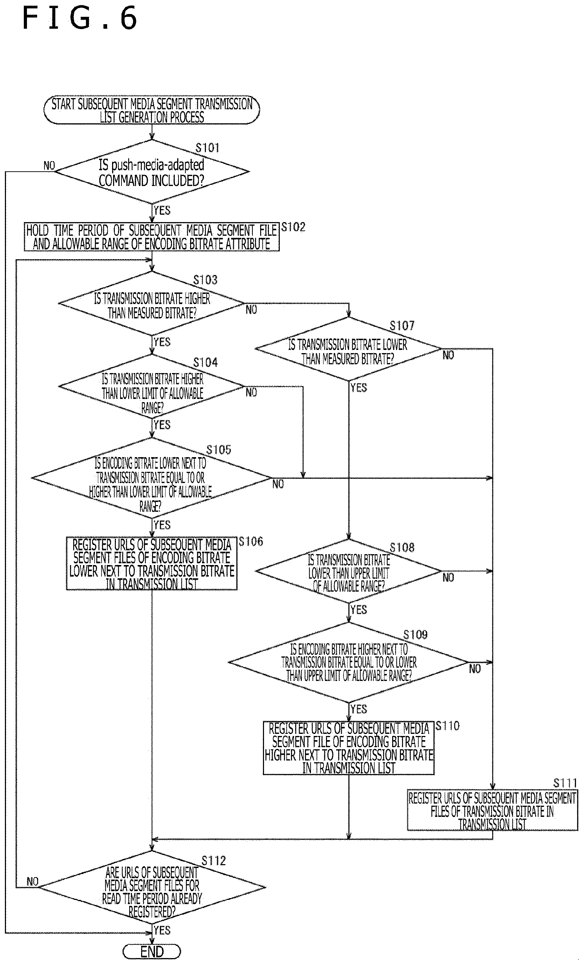

   Fig. 6 is a flowchart for describing details of start of a subsequent media segment transmission list generation process.
[Fig. 7]

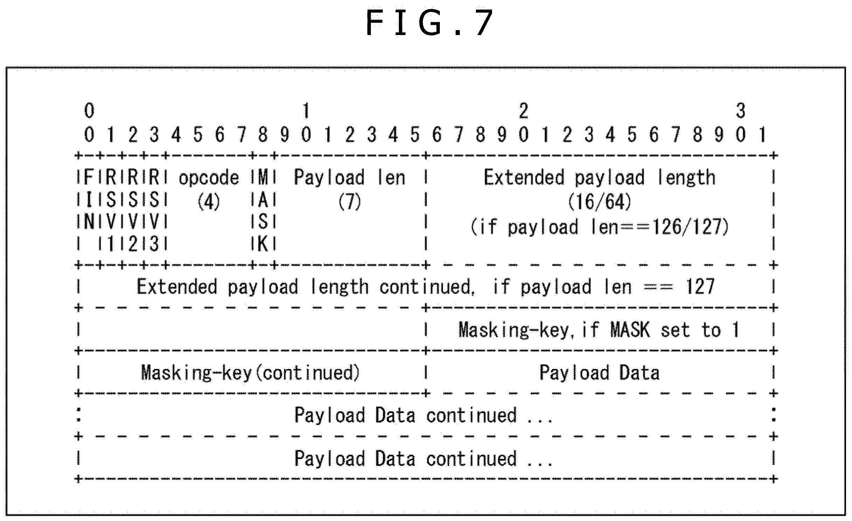

   Fig. 7 illustrates an example of a configuration of a frame according to the WebSocket protocol.
[Fig. 8]

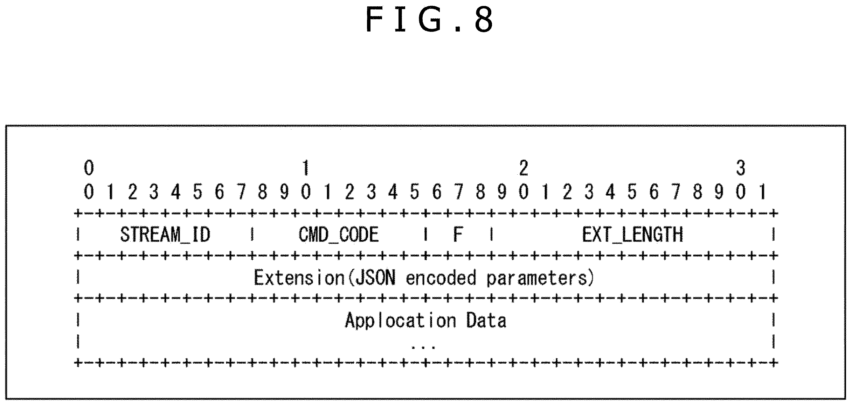

   Fig. 8 illustrates an example of a structure of a sub-frame according to a second embodiment.
[Fig. 9]

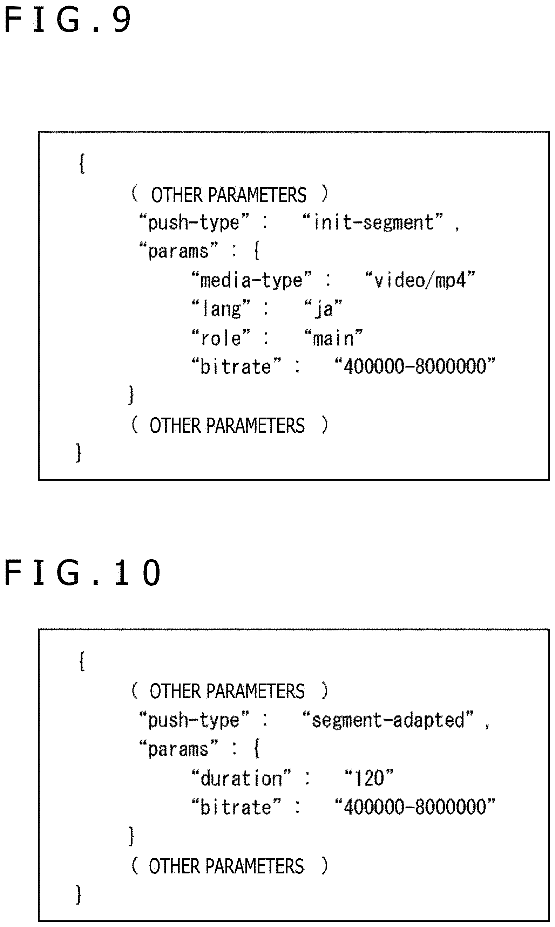

   Fig. 9 illustrates an example of an EXTENSION of the sub-frame.
[Fig. 10]
   Fig. 10 illustrates another example of the EXTENSION of the sub-frame.
[Fig. 11]

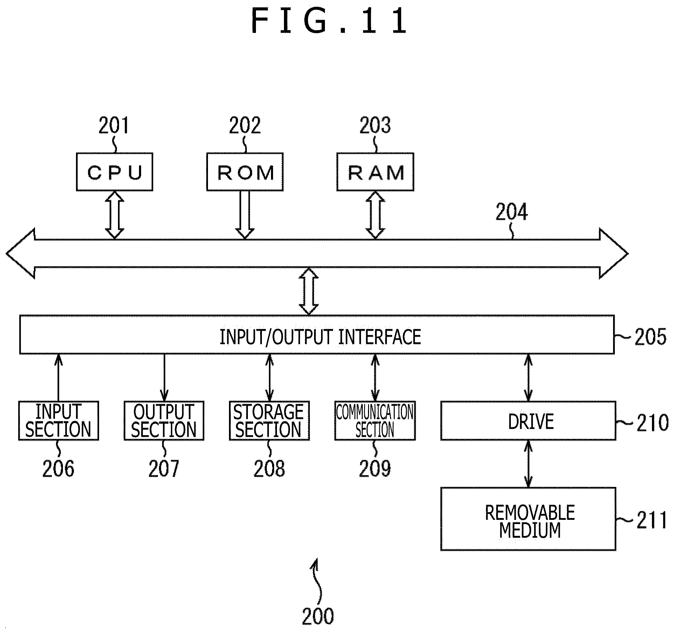

   Fig. 11 is a block diagram illustrates an example of a configuration of hardware of a computer.

### [Description of Embodiments]

Modes for carrying out the present disclosure (hereinafter, referred to as "embodiments") will be described hereinafter. It is noted that description will be given in the following order.
1. First Embodiment: Information Processing System (Figs. 1 to 6)
2. Second Embodiment: Information Processing System (Figs. 7 to 10)
3. Third Embodiment: Computer (Fig. 11)

### <First Embodiment>

### (Description of MPD File)

Fig. 1 is an illustrative diagram of a hierarchical structure of an MPD file under MPEG-DASH.

In the MPD file, information such as encoding schemes, encoding bitrates, video resolutions, and languages of motion video contents are hierarchized and described in an XML format.

Specifically, as illustrated in Fig. 1, the MPD file hierarchically includes elements such as a Period element, an AdaptationSet element, a Representation element, a SegmentInfo element, and so on.

In the MPD file, a motion video content managed by the MPD file itself is divided by a predetermined time range (for example, by a program, a CM (Commercial), and the like). The Period element is described for every divided motion video content. The Period element has information such as reproduction start clock time of a program (data such as a synchronized set of video data and audio data) of the motion video content.

AdaptationSet elements are included in the Period element and group Representation elements of the motion video contents that correspond to the Period element by media types, attributes, and the like. The AdaptationSet elements each have a media type, attributes, and the like common to the motion video contents corresponding to the Representation elements belonging to one group.

The Representation elements are included in one AdaptationSet element that groups the Representation elements, and are described for every segment file group of the motion video contents identical in media type and attributes among the motion video contents corresponding to the Period element that is an upper layer. Each of the Representation elements has an attribute, a URL, and the like common to the segment file group corresponding to this Representation element.

A SegmentInfo element is included in each Representation element, and has information (for example, a URL) associated with each segment file in the segment file group corresponding to the Representation.

### (Example of Configuration of First Embodiment of Information Processing System)

Fig. 2 is a block diagram illustrating an example of a configuration of a first embodiment of an information processing system to which the present disclosure is applied.

An information processing system 10 of Fig. 2 is configured by connecting a delivery server 11 to a reproduction client 12 via a network 13. The information processing system 10 performs dynamic adaptive streaming under MPEG-DASH in conformity with HTTP/2.

Specifically, the delivery server 11 in the information processing system 10 is configured with a storage section 30, an http server 31, an analysis section 32, a measuring section 33, a selection section 34, and a selection section 35.

The storage section 30 (storage) in the delivery server 11 stores an MPD file that manages segment files of motion video contents possessing attributes for each of a plurality of media types and the segment files.

The segment files are configured with media segment files each storing an encoded stream of the motion video content by a time unit referred to as "segment" of a few seconds to ten seconds and an initialization segment file that includes parameters used when the encoded stream is decoded.

The encoded stream stored in each media segment file is an encoded stream obtained by encoding a motion video content for every media type and for every attribute. In the first embodiment, it is assumed that attribute kinds include a language, a role (purpose), and an encoding bitrate. For example, therefore, encoded streams having different encoding bitrates or encoded streams having different languages are stored in different media segment files.

The http server 31 communicates with the reproduction client 12 via the network 13 in conformity with HTTP/2. Specifically, the http server 31 receives an HTTP GET request (hereinafter, referred to as "MPD request") transmitted from the reproduction client 12 to request the delivery server 11 to transmit an MPD file. The http server 31 reads the MPD file from the storage section 30 on the basis of a URL of the MPD file assigned in the MPD request (management file request information), and transmits the MPD file to the reproduction client 12. In addition, the http server 31 supplies a header of the MPD request to the analysis section 32.

Moreover, the http server 31 receives an HTTP GET request (hereinafter, referred to as "media request") that is transmitted from the reproduction client 12 to request the delivery server 11 to transmit a media segment file possessing a predetermined attribute for a predetermined media type and having predetermined reproduction clock time. The http server 31 reads the media segment file from the storage section 30 via the selection section 35 on the basis of a URL assigned in the media request (content file request information), and transmits the media segment file to the reproduction client 12. In addition, the http server 31 supplies a header of the media request to the analysis section 32.

Moreover, the http server 31 (transmission section) transmits the initialization segment file supplied from the selection section 34 and the media segment files supplied from the selection section 35 to the reproduction client 12.

The analysis section 32 analyzes the header of the MPD request supplied from the http server 31, and extracts an extension header that describes a push-init-segment command. The push-init-segment command is a push command to request the delivery server 11 to transmit the initialization segment file possessing a predetermined attribute of a predetermined media type among the initialization segment files of motion video contents possessing attributes for each of a plurality of media types stored in the storage section 30.

A description of the extension header that describes the push-init-segment command is "Accept-push-policy: "type"="push-init-segment," PUSH_PARAMS." "Accept-push-policy" is a name of the extension header and indicates that the extension header is an extension header that describes a push command to the delivery server 11. A description after "Accept-push-policy" assigns a value of each parameter by connecting a code that indicates the parameter to a value of the parameter by an equal sign.

In other words, in "type"="push-init-segment," a code "type" that indicates a type (kind) of the push command as the parameter and "push-init-segment" that is the value of the parameter are connected by the equal sign. Therefore, the push-init-segment command is assigned as the type of the push command described in the extension header.

Further, "PUSH_PARAMS" after "type"="push-init-segment" is a description connecting a code that indicates, as a parameter, a media type (kind) or an attribute kind of the initialization segment file which the delivery server 11 is requested to transmit by the push-init-segment command to the value of the parameter by an equal sign. The media type or attribute of the initialization segment file which the delivery server 11 is requested to transmit by the push-init-segment command is assigned by this description.

For example, in "PUSH_PARAMS," a code "media" that indicates the media type as the parameter is connected to MIME-type that is the value indicating the media type by an equal sign. The media type of the initialization segment file which the delivery server 11 is requested to transmit by the push-init-segment command is thereby assigned. Examples of MIME-type that indicates the media type include "video/mp4" and "audio/mp4." "video/mp4" indicates a video filed in an MP4 format as the media type, and "audio/mp4" indicates audio filed in the MP4 format as the media type.

Furthermore, in "PUSH_PARAMS," a code "lang" indicating a language as the parameter is connected to a language code based on ISO 639-1 as attribute information indicating an attribute of the language by an equal sign. The attribute of the language of the initialization segment file which the delivery server 11 is requested to transmit by the push-init-segment command is thereby assigned. In a case of assigning, for example, Japanese as the attribute of the language, "lang"="ja" is described in "PUSH_PARAMS." It is noted that the attribute of the language can be assigned only in a case of assigning audio or subtitles as the media type.

Moreover, in "PUSH_PARAMS," a code "role" indicating a purpose (role) as the parameter is connected to the value of a role attribute that could be possessed by the AdaptationSet elements in the MPD file as attribute information associated with the purpose (role) by an equal sign. The attribute of the purpose (role) of the initialization segment file which the delivery server 11 is requested to transmit by the push-init-segment command is thereby assigned. Examples of the value of the role attribute that could be possessed by the MPD file include "main," "alternate," "supplementary," "commentary," "dub (dubbing)," and "description."

Furthermore, in "PUSH_PARAMS," a code "bitrate" indicating an encoding bitrate as the parameter is connected to a range of the encoding bitrate per second as attribute information associated with the encoding bitrate by an equal sign. A range of the attribute of the encoding bitrate of the initialization segment file which the delivery server 11 is requested to transmit by the push-init-segment command is thereby assigned.

Therefore, the description of the extension header that describes the push-init-segment command assigning the media type, the purpose (role), and the encoding bitrate of the initialization segment file which the delivery server 11 is requested to transmit by the push-init-segment command is, for example, "Accept-push-policy: "type"="push-init-segment,""media"="video/mp4,""role"="main,""bitrate"="400000-8000000"."

In this case, the video filed in the MP4 format is assigned as the media type of the initialization segment file which the delivery server 11 is requested to transmit by the push-init-segment command, and "main" is assigned as the attribute information associated with the purpose (role). In addition, a range of 400 kbps to 8 Mbps is assigned as the range of the attribute information associated with the encoding bitrate.

The analysis section 32 recognizes the media type and the attributes assigned by "PUSH_PARAMS" in the extension header that describes the push-init-segment command, and supplies the media type and the attributes to the selection section 34.

Furthermore, the analysis section 32 analyzes the header of the media request supplied from the http server 31, and extracts an extension header that describes a push-media-adapted command. The push-media-adapted command is a push command to request the delivery server 11 to transmit subsequent media segment files (files of subsequent contents) each at an encoding bitrate selected by a source within an allowable range. It is noted that the subsequent media segment files are media segment files having reproduction clock time later than the reproduction clock time of the media segment file which the delivery server 11 is requested to transmit by the media request and possessing identical attributes other than the encoding bitrate to the media segment file which the delivery server 11 is requested to transmit.

A description of the extension header that describes the push-media-adapted command is "Accept-push-policy: "type"="push-media-adapted," PUSH_PARAMS." The description of the extension header that describes the push-media-adapted command is similar to that of the extension header that describes the push-init-segment command except for the type of the push command and parameters in PUSH_PARAMS.

In other words, in "type"="push-media-adapted" in the description of the extension header that describes the push-media-adapted command, a code "type" is connected to "push-init-segment" by an equal sign. Therefore, the push-media-adapted command is assigned as the type of the push command described in the extension header.

Further, "PUSH_PARAMS" after "type"="push-media-adapted" is a description connecting codes that indicate, as parameters, a time period of the subsequent media segment files which the delivery server 11 is requested to transmit by the push-media-adapted command to the allowable range of the encoding bitrates to values of the parameters by an equal sign. The time period of the subsequent media segment files which the delivery server 11 is requested to transmit by the push-media-adapted command and the allowable range of the encoding bitrates are assigned by this description.

Examples of the code that indicates the time period of the subsequent media segment files as the parameter include "duration" and "number." In a case in which the code that indicates the time period of the subsequent media segment files is "duration," the code "duration" is connected to an integer value that indicates reproduction time in seconds as information indicating the time period of the subsequent media segment files by an equal sign in "PUSH_PARAMS." On the other hand, in a case in which the code that indicates the time period of the subsequent media segment file is "number," the code "number" is connected to an integer value that indicates the number of files as the information indicating the time period of the subsequent media segment files by an equal sign in "PUSH_PARAMS." The time period of the subsequent media segment files which the delivery server 11 is requested to transmit by the push-media-adapted command is thereby assigned.

Furthermore, in "PUSH_PARAMS," a code "bitrate" that indicates the allowable range of the encoding bitrate as the parameter is connected to a range of the encoding bitrate per second as range information that indicates the allowable range of the encoding bitrate by an equal sign. The range information associated with the encoding bitrate of the subsequent media segment files which the delivery server 11 is requested to transmit by the push-media-adapted command is thereby assigned.

Therefore, the description of the extension header that describes the push-media-adapted command assigning the time period of the subsequent media segment files which the delivery server 11 is requested to transmit by the push-media-adapted command by the reproduction time is, for example, "accept-push-policy:"type"="push-media-adapted,""duration"="120,""bitrate"="400000-8000000"." In this case, 120 seconds is assigned as the reproduction time of the subsequent media segment files which the delivery server 11 is requested to transmit by the push-media-adapted command, and a range of 400 kbps to 8 Mbps is assigned as the allowable range of the encoding bitrate.

The analysis section 32 recognizes the time period and the allowable range of the encoding bitrate assigned by "PUSH_PARAMS" in the extension header that describes the push-media-adapted command, and supplies the time period and the allowable range of the encoding bitrate to the selection section 35.

The measuring section 33 measures an effective data transmission rate of the MPD file, the initialization segment file, and the media segment files transmitted from the http server 31. Specifically, at a time of receiving data, an ACK signal is transmitted as a notification of reception of the data in transmission between the delivery server 11 and the reproduction client 12. Therefore, the measuring section 33 measures the effective data transmission rate on the basis of a status of the ACK signal from the reproduction client 12 in, for example, a TCP (Transfer Control Protocol) layer. The measuring section 33 supplies the data transmission rate obtained as a result of a measurement to the selection section 35 as a measured bitrate that indicates an effective bandwidth of the network 13.

The selection section 34 generates and holds a transmission list in which the URLs of the initialization segment files having the assigned media type and the assigned attributes and supplied from the analysis section 32 are registered, on the basis of the MPD file stored in the storage section 30.

Specifically, the selection section 34 selects Representation elements in the AdaptationSet elements that have the assigned media type from among all Representation elements described in the MPD file. The selection section 34 then selects a Representation element that possesses the assigned attribute or the Representation element in the AdaptationSet element that groups Representation elements and that possesses the assigned attribute from among the selected Representation elements.

For example, in the MPD file, each Representation element possesses the attribute information associated with the encoding bitrate as a bandwidth attribute. Therefore, in a case in which the assigned attribute kind is only the encoding bitrate, the selection section 34 selects a Representation element possessing the attribute information associated with attributes in the range of attributes of the assigned encoding bitrate as the bandwidth attribute from among the selected Representation elements.

In a case in which the number of assigned attribute kinds is two or more, the selection section 34 selects Representation elements corresponding to all attribute kinds. However, in a case in which there is no Representation element corresponding to all attribute kinds, the selection section 34 reduces the number of attribute kinds used for the selection on the basis of a priority of each attribute kind.

While it is assumed herein that the priority of each attribute kind is determined in advance, the priority may be determined on the basis of a sequence assigned by PUSH_PARAMS.

The selection section 34 generates and holds the transmission list in which the URL of the initialization segment file included in the Representation element selected as described above is registered, as an initialization segment file transmission list. The selection section 34 reads the initialization segment file from the storage section 30 on the basis of the URL registered in the initialization segment file transmission list, and supplies the initialization segment file to the http server 31.

The selection section 35 selects an encoding bitrate of the subsequent media segment files from the encoding bitrates within the allowable range on the basis of the measured bitrate, the MPD file, and the time period and the allowable range of the encoding bitrate supplied from the analysis section 32.

Specifically, the selection section 35 selects, from the MPD file, Representation elements to which the subsequent media segment files possessing encoding bitrates within the allowable range as the bandwidth attribute belong. The selection section 35 then selects a Representation element possessing the encoding bitrate suited for the measured bitrate as the bandwidth attribute from among the selected Representation elements.

The selection section 35 generates and holds a transmission list in which URLs of the subsequent media segment files belonging to the selected Representation element are registered, as a subsequent media segment file transmission list. The selection section 35 reads the subsequent media segment files from the storage section 30 on the basis of the URLs registered in the subsequent media segment file transmission list, and supplies the subsequent media segment files to the http server 31.

The reproduction client 12 is configured with a request generation section 50, an http client 51, an MPD parser 52, a selection section 53, a receiving buffer 54, and a reproduction section 56.

The request generation section 50 in the reproduction client 12 generates the MPD request with the header including the push-init-segment command. Specifically, the reproduction client 12 does not acquire the MPD file yet at a time of generating the MPD request; thus, the attributes and the media type of the initialization segment file actually stored in the delivery server 11 are unknown to the reproduction client 12. However, the reproduction client 12 can select media types and attributes of initialization segment file that could become necessary from values that could be taken on as the media types and the attributes of the initialization segment file, on the basis of characteristics of the reproduction client 12, user's preferences, and the like.

Therefore, the request generation section 50 generates the extension header that describes the push-init-segment command assigning the media type and the attributes of the initialization segment file that could be necessary, and generates the MPD request with the header including the extension header. The request generation section 50 supplies the MPD request to the http client 51.

Furthermore, the request generation section 50 generates the media request with the header including the push-media-adapted command on the basis of the URL and the allowable range of the encoding bitrate supplied from the selection section 53. Specifically, the request generation section 50 generates the media request in which the URL is arranged in a data part (body) and the extension header that describes the push-media-adapted command assigning the time period of the subsequent media segment files and the allowable range of the encoding bitrate is arranged in a header part. The request generation section 50 supplies the media request to the http client 51.

The http client 51 (transmission section) communicates with the delivery server 11 via the network 13 in conformity with HTTP/2. Specifically, the http client 51 transmits the MPD request and the media request supplied from the request generation section 50 to the delivery server 11. The http client 51 receives the MPD file and the initialization segment file transmitted from the delivery server 11 in response to the MPD request.

The http client 51 supplies the MPD file to the MPD parser 52, and supplies the initialization segment file to the receiving buffer 54. In addition, the http client 51 receives the media segment file transmitted from the delivery server 11 in response to the media request, and supplies the media segment file to the receiving buffer 54.

The MPD parser 52 analyzes the MPD file supplied from the http client 51, and supplies Representation information including a media type, attributes, URLs, and the like corresponding to each Representation element to the selection section 53.

The selection section 53 determines the media type and the attributes of the media segment file at the URL assigned in the media request, on the basis of the measured bitrate supplied from the bandwidth estimation section 57, the characteristics of the reproduction client 12, the user's preferences, and the like.

The selection section 53 selects Representation information associated with the media segment file at the URL assigned in the media request from among the Representation information supplied from the MPD parser 52 on the basis of the determined media type and attributes. Furthermore, the selection section 53 determines the URL of the media segment file assigned in the media request on the basis of the reproduction clock time of the media segment file at the URL assigned in the media request and the selected Representation information, and supplies the URL to the request generation section 50.

Moreover, the selection section 53 determines the allowable range of the encoding bitrate of the subsequent media segment files on the basis of the measured bitrate, the characteristics of the reproduction client 12, the user's preferences, and the like, and supplies the allowable range to the request generation section 50.

The receiving buffer 54 holds the initialization segment file and the media segment file supplied from the http client 51.

The reproduction section 56 reads the initialization segment file to be reproduced from the receiving buffer 54 and sets the parameters included in the initialization segment file. Furthermore, the reproduction section 56 reads the media segment file to be reproduced from the receiving buffer 54. The reproduction section 56 decodes and reproduces the encoded stream stored in the read media segment file using the set parameters.

The bandwidth estimation section 57 measures an effective data reception rate on the basis of data volumes of the initialization segment file and the media segment file held in the receiving buffer 54. The bandwidth estimation section 57 supplies a data reception rate obtained as a result of a measurement to the selection section 53 as a measured bitrate.

### (Example of Hierarchical Structure of Software of Reproduction Client)

Fig. 3 illustrates an example of a hierarchical structure of software of the reproduction client 12 of Fig. 2.

As illustrated in Fig. 3, a lowermost layer of software of the reproduction client 12 is a hardware layer configured with the receiving buffer 54 and a reproduction section 70. In addition, an intermediate layer is configured with a DASH client section 71, a bandwidth estimation section 72, and a reproduction control section 73, and an uppermost layer is configured with an application section 74.

The DASH client section 71 is software that realizes the http client 51 and the MPD parser 52, and the bandwidth estimation section 72 is software that realizes the bandwidth estimation section 57. Furthermore, the reproduction control section 73 is software that controls the reproduction section 70, and the reproduction section 70 and the reproduction control section 73 realize the reproduction section 56. The application section 74 is software that realizes the request generation section 50, the selection section 53, and the like.

### (Description of Processes Performed by Information Processing System)

Fig. 4 is a flowchart for describing processes performed by the information processing system 10 of Fig. 2.

In Step S11 of Fig. 4, the request generation section 50 in the reproduction client 12 selects a media type and attributes of the initialization segment file that could become necessary from values that could be taken on as the media type and the attributes of the initialization segment file.

In Step S12, the request generation section 50 generates the MPD request with the header including the extension header that describes the push-init-segment command assigning the selected media type and attribute, and supplies the MPD request to the delivery server 11.

In Step S41, the http server 31 in the delivery server 11 receives the MPD request transmitted from the reproduction client 12. In addition, the http server 31 reads the MPD file from the storage section 30 on the basis of the URL of the MPD file assigned in the MPD request. In Step S42, the http server 31 transmits the read MPD file to the reproduction client 12 as a response to the MPD request. Furthermore, the http server 31 supplies the header of the MPD request to the analysis section 32.

In Step S13, the http client 51 receives the MPD file transmitted from the delivery server 11, and supplies the MPD file to MPD parser 52. The MPD parser 52 analyzes the MPD file supplied from the http client 51, and supplies the Representation information associated with each Representation element to the selection section 53.

In Step S43, the delivery server 11 performs an initialization segment file transmission list generation process for generating the initialization segment file transmission list on the basis of the push-init-segment command included in the header of the MPD request and the MPD file. Details of this initialization segment transmission list generation process will be described with reference to Fig. 5 to be described later.

In Step S44, the selection section 35 reads the initialization segment file from the storage section 30 on the basis of a first URL from the start of the URLs registered in the initialization segment file transmission list, and transmits the initialization segment file to the reproduction client 12 via the http server 31. The initialization segment file corresponding to an i-th URL from the start of the URLs registered in the initialization segment file transmission list will be referred to as "initialization segment file #i," hereinafter.

In Step S14, the http client 51 receives the initialization segment file #1 transmitted from the delivery server 11, and supplies the initialization segment file #1 to the receiving buffer 54 so that the receiving buffer 54 holds the initialization segment file #i.

After a process in Step S44, initialization segment files #i+1 to #n-1 are sequentially transmitted to the reproduction client 12 in a similar manner as that of the process in Step S44. After the process in Step S14, the initialization segment files #i+1 to #n-1 are sequentially received from the delivery server 11 in a similar manner as that of the process in Step S14. It is noted that n is the number of URLs registered in the initialization segment file transmission list and is an integer equal to or greater than 1.

After transmission of the initialization segment file #n-1, in Step S45, the selection section 35 transmits an initialization segment file #n to the reproduction client 12 in a similar manner as that of the process in Step S44.

In addition, after receiving the initialization segment file #n-1, in Step S15, the http client 51 receives the initialization segment file #n from the delivery server 11 in a similar manner as the process in Step S14, and supplies the initialization segment file #n to the receiving buffer 54 so that the receiving buffer 54 holds the initialization segment file #n.

In Step S16, the selection section 53 determines the URL of the media segment file assigned in the media request on the basis of the measured bitrate supplied from the bandwidth estimation section 57, the characteristics of the reproduction client 12, the user's preferences, and the like. Moreover, the selection section 53 determines the allowable range of attributes of the encoding bitrate of the subsequent media segment files on the basis of the measured bitrate, the characteristics of the reproduction client 12, the user's preferences, and the like. In addition, the selection section 53 supplies the determined URL and allowable range to the request generation section 50.

In Step S17, the request generation section 50 generates the media request with the header including the push-media-adapted command on the basis of the URL and the allowable range of the encoding bitrate supplied from the selection section 53, and transmits the media request to the delivery server 11 via the http client 51.

In Step S46, the http server 31 receives the media request transmitted from the reproduction client 12. In Step S47, the http server 31 reads the media segment file from the storage section 30 via the selection section 35 on the basis of the URL assigned in the media request, and transmits the media segment file to the reproduction client 12. In addition, the http server 31 supplies the header of the media request to the analysis section 32.

In Step S18, the http client 51 receives the media segment file transmitted from the delivery server 11, and supplies the media segment file to the receiving buffer 54 so that the receiving buffer 54 holds the media segment file.

In Step S48, the delivery server 11 performs a subsequent media segment file transmission list generation process for generating the subsequent media segment file transmission list on the basis of the push-media-adapted command included in the header of the media request and the MPD file. Details of this subsequent media segment file transmission list generation process will be described with reference to Fig. 6 to be described later.

In Step S49, the selection section 35 reads the subsequent media segment file from the storage section 30 on the basis of a first URL from the start of the URLs registered in the subsequent media segment file transmission list, and transmits the subsequent media segment file to the reproduction client 12 via the http server 31. The subsequent segment file corresponding to an i-th URL from the start of the URLs registered in the subsequent media segment file transmission list will be referred to as "subsequent media segment file #i," hereinafter.

In Step S19, the http client 51 receives the subsequent media segment file #1 transmitted from the delivery server 11, and supplies the subsequent media segment file #1 to the receiving buffer 54 so that the receiving buffer 54 holds the subsequent media segment file #1.

After a process in Step S49, subsequent media segment files #i+1 to #m-1 are sequentially transmitted to the reproduction client 12 in a similar manner as that of a process in Step S49. In addition, after a process in Step S19, the subsequent media segment files #i+1 to #m-1 are sequentially received from the delivery server 11 in a similar manner as that of a process in Step S19. It is noted that m is the number of URLs registered in the subsequent media segment file transmission list and is an integer equal to or greater than 1.

After transmission of the subsequent media segment file #m-1, in Step S50, the selection section 35 transmits a subsequent media segment file #m to the reproduction client 12 via the http server 31 in a similar manner as that of the process in Step S49.

In addition, after receiving the subsequent media segment file #m-1, in Step S20, the http client 51 receives the subsequent media segment file #m from the delivery server 11 in a similar manner as the process in Step S19, and supplies the subsequent media segment file #m to the receiving buffer 54 so that the receiving buffer 54 holds the subsequent media segment file #m.

Among the initialization segment files and the subsequent media segment files held as described above, the initialization segment file and the subsequent media segment files to be reproduced are read by the reproduction section 56. As a result, the subsequent media segment files are reproduced.

Fig. 5 is a flowchart for describing the details of the initialization segment transmission list generation process in Step S43 of Fig. 4.

In an example of Fig. 5, priorities of the attributes are higher in an order of the language, the role, and the encoding bitrate.

In Step S71 of Fig. 5, the analysis section 32 determines whether the push-init-segment command is included in the header supplied from the http server 31. Specifically, the analysis section 32 determines whether the header supplied from the http server 31 includes the extension header with a header name of "accept-push-policy" and whether the extension header includes "type"="push-init-segment."

In a case of determining in Step S71 that the push-init-segment command is included, the process goes to Step S72. In Step S72, the selection section 34 sets the initialization segment files corresponding to all the Representation elements described in the MPD file as those to be pushed (to be transmitted), and registers the URLs of the initialization segment files included in the Representation elements in the transmission list.

In Step S73, the analysis section 32 determines whether a media type is assigned in the push-init-segment command, that is, whether the extension header includes a code "media" In a case of determining in Step S73 that the media type is assigned in the push-init-segment command, the analysis section 32 recognizes the media type indicated by MIME-type connected to the code "media" by the equal sign as the assigned media type and supplies the media type to the selection section 34.

In Step S74, the selection section 34 deletes the URLs corresponding to media types that are supplied from the analysis section 32 and that are other than the assigned media type, from the transmission list. Specifically, the selection section 34 deletes, from the transmission list, the URLs of the initialization segment files included in the Representation elements categorized in the groups by the AdaptationSet elements having the media types other than the assigned media type. The process then goes to Step S75.

On the other hand, in a case of determining in Step S73 that the media type is not assigned in the push-init-segment command, the process skips Step S74 and goes to Step S75.

In Step S75, the selection section 34 determines whether a language attribute is assigned in the push-init-segment command and whether URLs corresponding to the language attribute are present in the transmission list. In other words, in a case in which the extension header includes the code "lang" and an attribute indicated by the language code connected to the code "lang" by the equal sign is supplied from the analysis section 32 as the assigned language attribute, the selection section 34 determines whether URLs of the initialization segment files included in the Representation element possessing the attribute are present in the transmission list.

In a case of determining in Step S75 that the language attribute is assigned in the push-init-segment command and that URLs corresponding to the language attribute are present in the transmission list, the process goes to Step S76.

In Step S76, the selection section 34 deletes the URLs corresponding to language attributes that are supplied from the analysis section 32 and that are other than the assigned language attribute, from the transmission list. The process then goes to Step S77.

On the other hand, in a case of determining in Step S75 that the language attribute is not assigned in the push-init-segment command or that URLs corresponding to the language attribute assigned in the push-init-segment command are not present in the transmission list, the process skips Step S76 and goes to Step S77.

In Step S77, the selection section 34 determines whether a role attribute is assigned in the push-init-segment command and whether URLs corresponding to the role attribute are present in the transmission list. In other words, in a case in which the extension header includes a code "role" and an attribute indicated by a value of the role attribute connected to the code "role" by the equal sign is supplied from the analysis section 32 as the assigned role attribute, the selection section 34 determines whether URLs of the initialization segment files included in the Representation element possessing the attribute are present in the transmission list.

In a case of determining in Step S77 that the role attribute is assigned in the push-init-segment command and that URLs corresponding to the role attribute are present in the transmission list, the process goes to Step S78.

In Step S78, the selection section 34 deletes the URLs corresponding to role attributes that are supplied from the analysis section 32 and that are other than the assigned role attribute, from the transmission list. The process then goes to Step S79.

On the other hand, in a case of determining in Step S77 that the role attribute is not assigned in the push-init-segment command or that URLs corresponding to the role attribute assigned in the push-init-segment command are not present in the transmission list, the process skips Step S78 and goes to Step S79.

In Step S79, the selection section 34 determines whether a range of an encoding bitrate attribute is assigned in the push-init-segment command and whether URLs corresponding to the encoding bitrate within the range are present in the transmission list. In other words, in a case in which the extension header includes the code "bitrate" and a range of the attribute indicated by the attribute information connected to the code "bitrate" by the equal sign is supplied from the analysis section 32 as the assigned range of the encoding bitrate attribute, the selection section 34 determines whether URLs of the initialization segment files included in the Representation element possessing the encoding bitrate within the attribute range are present in the transmission list.

In a case of determining in Step S79 that the range of the encoding bitrate attribute is assigned in the push-init-segment command and the URLs corresponding to the encoding bitrate within the range are present in the transmission list, the process goes to Step S80.

In Step S80, the selection section 34 deletes the URLs corresponding to encoding bitrate attributes that are supplied from the analysis section 32 and that are out of the range of the assigned encoding bitrate attribute, from the transmission list. The process is then ended.

On the other hand, in a case of determining in Step S79 that the range of the encoding bitrate attribute is not assigned in the push-init-segment command or the URLs corresponding to the encoding bitrate within the range of the encoding bitrate attribute assigned in the push-init-segment command are not present in the transmission list, the process skips Step S80 and is ended.

Furthermore, in a case of determining in Step S71 that the push-init-segment command is not included, the process is ended.

It is noted that in a case of deleting all the URLs registered in the transmission list in Steps S74, S76, and S78, the selection section 34 does not execute deletion. Furthermore, in a case of deleting all the URLs registered in the transmission list in Step S80, the selection section 34 does not delete URLs from the transmission list but leaves a URL corresponding to the encoding bitrate closest to a lower limit or an upper limit of the assigned range of the encoding bitrate attribute.

For example, in a case in which the encoding bitrates corresponding to all the URLs registered in the transmission list are lower than the assigned range, the selection section 34 leaves the URL corresponding to the encoding bitrate closest to the lower limit of the assigned range. On the other hand, in a case in which the encoding bitrates corresponding to all the URLs registered in the transmission list are higher than the assigned range, the selection section 34 leaves the URL corresponding to the encoding bitrate closest to the upper limit of the assigned range.

Fig. 6 is a flowchart for describing the details of start of the subsequent media segment transmission list generation process in Step S48 of Fig. 4.

In Step S101 of Fig. 6, the analysis section 32 determines whether the push-media-adapted command is included in the header supplied from the http server 31. Specifically, the analysis section 32 determines whether the header supplied from the http server 31 includes the extension header with a header name of "accept-push-policy" and whether the extension header includes "type"="push-media-adapted."

In a case of determining in Step S101 that the push-media-adapted command is included, in Step S102, the analysis section 32 recognizes and holds the time period of the subsequent media segment files and the allowable range of the encoding bitrate assigned in the push-media-adapted command.

In Step S103, the selection section 35 determines whether the transmission bitrate of the media segment file currently to be transmitted is higher than the measured bitrate supplied from the measuring section 33. In a case of determining in Step S103 that the transmission bitrate is higher than the measured bitrate, the process goes to Step S104.

In Step S104, the selection section 35 reads the allowable range from the analysis section 32 and determines whether the transmission bitrate is higher than the lower limit of the allowable range. In a case of determining in Step S104 that the transmission bitrate is higher than the lower limit of the allowable range, the process goes to Step S105.

In Step S105, the selection section 35 determines whether the encoding bitrate lower next to the transmission bitrate and possessed, as Bandwidth, by the Representation element to which the subsequent media segment files described in the MPD file belongs is equal to or higher than the lower limit of the allowable range.

In a case of determining in Step S105 that the encoding bitrate is equal to or higher than the lower limit of the allowable range, the selection section 35 registers URLs of the subsequent media segment files belonging to the Representation element possessing the encoding bitrate lower next to the transmission bitrate in the transmission list in Step S106. The process then goes to Step S112.

On the other hand, in a case of determining in Step S103 that the transmission bitrate is not higher than the measured bitrate, the selection section 35 determines whether the transmission bitrate is lower than the measured bitrate in Step S107. In a case of determining in Step S107 that the transmission bitrate is lower than the measured bitrate, the process goes to Step S108.

In Step S108, the selection section 35 reads the allowable range from the analysis section 32 and determines whether the transmission bitrate is lower than the upper limit of the allowable range. In a case of determining in Step S108 that the transmission bitrate is lower than the upper limit of the allowable range, the process goes to Step S109.

In Step S109, the selection section 35 determines whether the bitrate higher next to the transmission bitrate and possessed, as Bandwidth, by the Representation element to which the subsequent media segment files described in the MPD file belong is equal to or lower than the upper limit of the allowable range.

In a case of determining in Step S109 that the bitrate is equal to or lower than the upper limit of the allowable range, the selection section 35 registers URLs of the subsequent media segment files belonging to the Representation element possessing the encoding bitrate higher next to the transmission bitrate in the transmission list in Step S110. The process then goes to Step S112.

Furthermore, in a case of determining in Step S104 that the transmission bitrate is not higher than the lower limit of the allowable range or in a case of determining in Step S105 that the encoding bitrate lower next to the transmission bitrate is lower than the lower limit of the allowable range, the process goes to Step S111.

Moreover, in a case of determining in Step S107 that the transmission bitrate is not lower than the measured bitrate, that is, in a case in which the transmission bitrate is equal to the measured bitrate, the process goes to Step S111.

Further, in a case of determining in Step S108 that the transmission bitrate is not lower than the upper limit of the allowable range or in a case of determining in Step S109 that the encoding bitrate higher next to the transmission bitrate is higher than the upper limit of the allowable range, the process goes to Step Sill.

In Step S111, the selection section 35 registers the URLs of the subsequent media segment files belonging to the Representation element possessing the transmission bitrate in the transmission list. The process then goes to Step S112.

In Step S112, the selection section 35 reads the time period of the subsequent media segment files from the analysis section 32 and determines whether the URLs of the subsequent media segment files for the time period are already registered in the transmission list.

In a case of determining in Step S112 that the URLs of the subsequent media segment files for the read time period are not registered in the transmission list yet, the process returns to Step S103 and the process is repeated from Steps S103 to S112.

On the other hand, in a case of determining in Step S112 that the URLs of the subsequent media segment files for the read time period are still registered in the transmission list, the process is ended.

Furthermore, in a case of determining in Step S101 that the push-media-adapted command is not included, the process is ended.

As described above, in the information processing system 10, the reproduction client 12 transmits the MPD request including the push-init-segment command. Therefore, the reproduction client 12 can receive both the MPD file and the initialization segment file only by transmitting the MPD request. In other words, the reproduction client 12 does not need to transmit the HTTP GET request to request the delivery server 11 to transmit the initialization segment file. Therefore, the reproduction client 12 can efficiently request the delivery server 11 to transmit the initialization segment file. Furthermore, the delivery server 11 does not need to wait for reception of the HTTP GET to request the delivery server 11 to transmit the initialization segment file; thus, the delivery server 11 can efficiently transmit the initialization segment file.

Moreover, the push-init-segment command can assign the media type and the attributes of the initialization segment file which the delivery server 11 is requested to transmit. Therefore, it is unnecessary to wastefully receive unnecessary initialization segment files and it is possible to further improve efficiency of initialization segment file reception. As a result, it is possible to speed up startup.

On the other hand, in a case in which the push command included in the MPD request is unable to assign the media type and the attributes of the initialization segment file which the delivery server 11 is requested to transmit, the delivery server 11 transmits initialization segment files of all media types and all attributes in response to the MPD request. For example, in a case in which the push command included in the MPD request can assign only the URL of the initialization segment file, the reproduction client 12 does not acquire the MPD file at a time of the MPD request and is unable to assign the URL. Owing to this, the initialization segment files of all the media types and all the attributes are transmitted.

As a result, the receiving buffer 54 needs a large capacity to hold the received initialization segment files. For example, in a case in which the numbers of media types and attributes are large, the receiving buffer 54 needs to hold the initialization segment files of a data volume that is many times as large as a data volume of the initialization segment files necessary to reproduce.

Owing to this, in a case in which the receiving buffer 54 is small in capacity and unable to hold the initialization segment files of all the media types and all the attributes, the reproduction client 12 is unable to include the push command in the MPD request. As a result, the reproduction client 12 needs to transmit the HTTP GET request to request the delivery server 11 to transmit initialization segment files necessary for reproduction one at a time after receiving the MPD file.

Furthermore, the reproduction client 12 transmits the media request including the push-media-adapted command. Therefore, the reproduction client 12 can receive not only the media segment file at the URL assigned in the media request but also the subsequent media segment files only by transmitting the media request. In other words, the reproduction client 12 does not need to transmit a media request for every subsequent media segment file. Therefore, the reproduction client 12 can efficiently transmit a request to transmit the subsequent media segment files. Furthermore, the delivery server 11 does not need to wait for reception of the media request to request the delivery server 11 to transmit the subsequent media segment files; thus, the delivery server 11 can efficiently transmit the subsequent media segment files.

Moreover, the push-media-adapted command can assign the allowable range of the encoding bitrate of the subsequent media segment files. Owing to this, the delivery server 11 can change the encoding bitrate of the subsequent media segment files to be transmitted within the allowable range in response to an effective bandwidth of the network 13. As a result, it is possible to improve a reproduction quality.

In other words, at a time of, for example, starting streaming between the delivery server 11 and the reproduction client 12, the bandwidth estimation section 57 is unable to estimate the effective bandwidth of the network 13 yet. In this case, therefore, the selection section 53 sets a relatively low encoding bitrate as the encoding bitrate of the media segment files at the URLs assigned in the media request. Owing to this, in a case of applying this encoding bitrate to the encoding bitrate of the subsequent media segment files, the encoding bitrate of the subsequent media segment files is not an encoding bitrate suited for the effective bandwidth of the network 13.

In the light of the foregoing, the reproduction client 12 assigns the allowable range of the encoding bitrate of the subsequent media segment files in the push-media-adapted command. The reproduction client 12 can thereby change the encoding bitrate of the subsequent media segment files to be received to the encoding bitrate suited for the effective bandwidth of the network 13 within the allowable range. As a result, it is possible to improve the reproduction quality.

Moreover, the reproduction client 12 receives the subsequent media segment files possessing the encoding bitrate suited for the effective bandwidth of the network 13; thus, the reproduction client 12 does not need to transmit a command in response to the effective bandwidth of the network 13 to the delivery server 11. Therefore, the reproduction client 12 can efficiently receive the subsequent media segments possessing the encoding bitrate suited for the effective bandwidth of the network 13.

On the other hand, in a case in which the push command included in the media request assigns only the time period of the subsequent media segment files and does not assign the allowable range of the encoding bitrate, and in which the effective bandwidth of the network 13 changes within the time period of the subsequent media segment files, the reproduction client 12 needs to cancel the push command. Furthermore, the reproduction client 12 needs to retransmit a media request including a push command to assign the encoding bitrate suited for the effective bandwidth anew. Owing to this, even with a long time period assigned as the time period of the subsequent media segment files, a probability of cancellation of the push command and transmission of the media request increases, with the result that it is often impossible to constrain the time required to transmit the media segment files.

Furthermore, the push-media-adapted command can assign not only the allowable range of the encoding bitrate but also the time period of the subsequent media segment files. Therefore, the reproduction client 12 can change the allowable range of the encoding bitrate stepwise. Extending the allowable range of the encoding bitrate stepwise enables the reproduction client 12 to gradually change the reproduction quality.

It is noted that the push-init-segment command may assign a plurality of media types by "PUSH_PARAMS." In this case, the code "media" and a description in which the values MIME-type of a plurality of media types are delimited by commas are connected by an equal sign. Likewise, the push-init-segment command may assign a plurality of items of attribute information associated with a certain kind of attribute by "PUSH_PARAMS."

Moreover, the push-init-segment command or the push-media-adapted command may assign only a lower limit or an upper limit of a range as a range of the value of each parameter. In this case, an unassigned lower limit or upper limit is set to 0 indicating that the lower limit or the upper limit is not assigned. For example, in a case of assigning 400 kbps as the lower limit of the attribute of the encoding bitrate and not assigning the upper limit thereof, a description is "bitrate"= "400000-0." In addition, in a case of not assigning the lower limit and assigning 8 Mbps as the upper limit, a description is "bitrate"= "0-8000000."

Moreover, the reproduction client 12 may transmit an HTTP GET request to request the delivery server 11 to transmit an initialization segment file other than the initialization segment file to be transmitted in response to the push-init-segment command. Even in this case, the number of HTTP GET requests can be reduced, compared with a case of transmitting HTTP GET requests to request the delivery server 11 to transmit all the initialization segment files.

Furthermore, while the reproduction client 12 always includes the push-media-adapted command in the media request in the first embodiment, the reproduction client 12 may include a push command other than the push-media-adapted command in the media request. For example, the reproduction client 12 may include a push command to assign only the time period of the subsequent media segment files in the media request. In this case, information that indicates the time period of the subsequent media segment files included in the push command is, for example, the number of subsequent media segment files (Push-next), reproduction time (Push-time), or a URL list or a URL template and a parameter (Push-template) that assigns a range ($number$) in which the template is applied. Furthermore, in this case, the subsequent media segment files identical in encoding bitrate to the media segment file at the URL assigned in the media request are transmitted to the reproduction client 12.

It is noted that in the first embodiment, each AdaptationSet element has the media type, and the attributes of the role and the language, and each Representation element has the attribute of the encoding bitrate. Alternatively, each the AdaptationSet element and the Representation element may have the media type and the attribute.

Moreover, while the attribute kinds include the encoding bitrate, the language, and the role (purpose) of the motion video content in the first embodiment, the attribute kinds may include a video resolution and a video frame rate, an audio sampling rate and the number of audio channels, or the like.

For example, in a case of assigning the video resolution in the push-init-segment command, a code "resolution" indicating the video resolution as a parameter and a range of the number of pixels in a vertical direction as the attribute information associated with the video resolution are connected by an equal sign. The attribute information associated with the video resolution is 2160 in a case in which the attribute is a 4k resolution, 1080 in a case in which the attribute is a full HD resolution, and 480 in a case in which the attribute is an SD resolution. Moreover, in the MPD file, each Representation element of the video has the attribute information associated with the video resolution as a height attribute.

Furthermore, in a case of assigning an audio sampling rate in the push-init-segment command, a code "audioSamplingRate" indicating the audio sampling rate as a parameter and a sampling rate range that serves as the attribute information associated with the audio sampling rate are connected by an equal sign. For example, in a case in which an attribute of the audio sampling rate is 48 kHz, the attribute information is 48000. Further, in the MPD file, each Representation element of the audio has the attribute information associated with the audio sampling rate as an audioSamplingRate attribute.

Moreover, the range information may be information (for example, Representation id) that identifies the Representation element which possesses the encoding bitrate within the allowable range as Bandwidth and to which the subsequent media segment files belong, or a range of the URLs of the subsequent media segment files belonging to the Representation element.

### <Second Embodiment>

### (Example of Configuration of Frame according to WebSocket Protocol)

A configuration of a second embodiment of an information processing system to which the present disclosure is applied is identical to that of the information processing system 10 of Fig. 1 except that communication is held between the delivery server 11 and the reproduction client 12 in conformity with the WebSocket protocol. Therefore, only the communication between the delivery server 11 and the reproduction client 12 will be described below.

Fig. 7 illustrates an example of a configuration of a frame according to the WebSocket protocol.

As illustrated in Fig. 7, the frame according to the WebSocket protocol is configured with a payload data part and a header part in front of the payload data part. The header part is intended to realize basic functions of the WebSocket protocol. An application specific function is realized using the payload part. It is noted that details of the frame according to the WebSocket protocol are described in NPL 2 and the like.

In a case of realizing the application specific function using the payload part, it is necessary to define a sub-protocol as a protocol of the payload part and to define a data structure of the payload part as a sub-frame.

In the second embodiment, the communication is held between the delivery server 11 and the reproduction client 12 in conformity with the WebSocket protocol. Therefore, it is necessary to realize streaming under the MPEG-DASH as the application specific function in the frame according to the WebSocket protocol. Thus, a DASH sub-protocol that is a sub-protocol for realizing streaming under the MPEG-DASH and a DASH sub-frame are defined.

### (Example of Structure of Sub-Frame)

Fig. 8 illustrates an example of a structure of the sub-frame according to the second embodiment.

The sub-frame of Fig. 8 is configured with STREAM_ID, CMD_CODE, F, EXT_LENGTH, EXTENSION, and the like. STREAM_ID is a value of eight bits indicating an ID of a stream exchanged in conformity with the WebSocket protocol. It is noted that the WebSocket protocol enables transmission and reception of a plurality of streams by one connection.

CMD_CODE is a value of eight bits indicating a type of a command defined in the DASH sub-protocol. For example, in a case in which this sub-frame is a sub-frame used at a time of transmission of the MPD request, CMD_CODE is 1. In a case in which the sub-frame is a sub-frame used at a time of transmission of the media request, CMD_CODE is 2.

Furthermore, in a case in which this sub-frame is a sub-frame used at a time of transmission of the MPD file as a response to the MPD request, CMD_CODE is 3. In a case in which this sub-frame is a sub-frame used at a time of transmission of the media segment file as a response to the media request, CMD_CODE is 4. Moreover, in a case in which this sub-frame is a sub-frame used at a time of cancellation of a push command, CMD_CODE is 255.

F is a flag of three bits specified per command. EXT_LENGTH is a value of 13 bits indicating a size of EXTENSION. EXTENSION stores values obtained by subjecting the parameters described in the headers of the MPD request and the media request in the first embodiment to JSON (JavaScript (registered trade mark)) encoding. Details of the JSON encoding is described in https://tools.ietf.org/html/rfc4627.

### (Example of EXTENSION)

Fig. 9 illustrates an example of EXTENSION in the sub-frame used at a time of transmission of the MPD request, and Fig. 10 illustrates an example of EXTENSION in the sub-frame used at a time of transmission of the media request.

As illustrated in Figs. 9 and 10, a value of each parameter is assigned by connecting a code indicating the parameter to a value of the parameter by a colon in EXTENSION.

Specifically, in EXTENSION of Fig. 9, a code "push-type" is connected to "init-segment" by a colon. Therefore, the push-init-segment command is assigned as a type of the push command described in EXTENSION.

Furthermore, since the code "media" is connected to "video/mp4" by a colon, a video filed in the MP4 format is assigned as the media type. Since the code "lang" is connected to "ja" by a colon, Japanese is assigned as the language attribute.

Moreover, since the code "role" is connected to "main" by a colon, "main" is assigned as the attribute information associated with the purpose. Since the code "bitrate" is connected to "400000-8000000" by a colon, the range of 400 kbps to 8 Mbps is assigned as the range of the attribute information associated with the encoding bitrate.

On the other hand, in EXTENSION of Fig. 10, the code "push-type" is connected to "segment-adapted" by a colon. Therefore, the push-segment-adapted command is assigned as a type of the push command described in EXTENSION.

Furthermore, since the code "duration" is connected to "120" by a colon, 120 seconds is assigned as the time period of the subsequent media segment files. Moreover, since the code "bitrate" is connected to "400000-8000000" by a colon, the range of 400 kbps to 8 Mbps is assigned as the allowable range of the encoding bitrate of the subsequent media segment files.

It is noted that the code "number" may be described as an alternative to the code "duration" in a similar manner as that according to the first embodiment. In this alternative, the code "number" is connected to an integer value indicating the number of subsequent media segment files by a colon.

### <Third Embodiment>

### (Description of Computer to Which the Present Disclosure is Applied)

A series of processes described above can be either executed by hardware or executed by software. In a case in which a series of processes is executed by software, a program constituting the software is installed into a computer. Here, types of the computer include a computer incorporated into dedicated hardware, a computer, for example, a general-purpose personal computer, capable of executing various functions by installing various programs into the computer, and the like.

Fig. 11 is a block diagram illustrating an example of a configuration of the hardware of the computer executing a series of processes described above by the program.

In a computer 200, a CPU (Central Processing Unit) 201, a ROM (Read Only Memory) 202, and a RAM (Random Access Memory) 203 are mutually connected by a bus 204.

An input/output interface 205 is also connected to the bus 204. An input section 206, an output section 207, a storage section 208, a communication section 209, and a drive 210 are connected to the input/output interface 205.

The input section 206 is configured from a keyboard, a mouse, a microphone, and the like. The output section 207 is configured from a display, a loudspeaker, and the like. The storage section 208 is configured from a hard disk, a nonvolatile memory, and the like. The communication section 209 is configured from a network interface and the like. The drive 210 drives a removable medium 211 such as a magnetic disk, an optical disk, a magneto-optical disk or a semiconductor memory.

In the computer 200 configured as described above, the CPU 201 loads a program stored in, for example, the storage section 208 to the RAM 203 via the input/output interface 205 and the bus 204 and executes the program, whereby a series of processes described above is performed.

The program executed by the computer 200 (CPU 201) can be provided by, for example, recording the program in the removable medium 211 serving as a package media or the like. Alternatively, the program can be provided via a wired or wireless transmission medium such as a local area network, the Internet, or a digital satellite service.

In the computer 200, the program can be installed into the storage section 208 via the input/output interface 205 by attaching the removable medium 211 to the drive 210. Alternatively, the program can be received by the communication section 209 via the wired or wireless transmission medium and installed into the storage section 208. In another alternative, the program can be installed into the ROM 202 or the storage section 208 in advance.

It is noted that the program executed by the computer 200 may be a program for performing processes in time series in an order described in the present specification or may be a program for performing the processes either in parallel or at necessary timing such as timing of calling.

Furthermore, a system means in the present specification a collection of a plurality of constituent elements (apparatuses, modules (components), and the like), regardless of whether or not all the constituent elements are provided in the same casing. Therefore, a plurality of apparatuses accommodated in different casings and connected to one another via a network and one apparatus in which a plurality of modules are accommodated in one casing can be both referred to as "system."

Furthermore, the effects described in the present specification are given as an example only, and the effects are not limited to those described in the present specification and may include other effects.

Moreover, the embodiments of the present disclosure are not limited to the embodiments described above and various changes can be made.

For example, the push-media-adapted command may assign a range of the attribute other than the encoding bitrate.

## Claims

1. An information processing apparatus (12) comprising:
a request generation section (50) that generates a command assigning a media type and attribute for an initialization segment file and generates an MPD (Media Presentation Description) request with a header including the command; and
a transmission section (51) that transmits the MPD request including the command to request a different information processing apparatus (11) to transmit an MPD file that manages a content possessing a plurality of attributes and the initialization segment file of the content possessing said media type and said attribute;
wherein when the request generation section (50) generates an MPD request not including said command, the transmission section (51) transmits the MPD request not including said command, to request that the different information processing apparatus (11) transmits said MPD file without transmitting the initialization segment file.

2. The information processing apparatus according to claim 1, wherein the information processing apparatus is configured such that
the transmission section transmits content file request information to request the different information processing apparatus to transmit a file of the content having a predetermined encoding bitrate and predetermined reproduction clock time and a file of a subsequent content that is the content having an encoding bitrate selected within an allowable range by the different information processing apparatus and having reproduction clock time later than the predetermined reproduction clock time.

3. The information processing apparatus according to claim 2,
wherein the information processing apparatus is configured such that
the file is a media segment file, and
the content file request information includes range information that indicates the allowable range.

4. An information processing method comprising:
a generation step of generating a command assigning a media type and attribute for an initialization segment file and generating an MPD (Media Presentation Description) request with a header including the command; and
a transmission step (S12) of, by an information processing apparatus (12), transmitting the MPD request including said command to request a different information processing apparatus (11) to transmit an MPD file that manages a content possessing a plurality of attributes and the initialization segment file of the content possessing said media type and said attribute;
wherein when a MPD request not including said command is generated, the MPD request not including said command is transmitted to request that the different information processing apparatus (11) transmits said MPD file without transmitting the initialization segment file.

5. An information processing apparatus (11) comprising:
a transmission section (31) that receives an MPD (Media Presentation Description) request with a header including a command assigning a media type and attribute for an initialization segment file from a different information processing apparatus (12);
wherein the transmission section transmits, in response to receiving the MPD request including said command, an MPD file that manages a content possessing a plurality of attributes and the initialization segment file of the content possessing said media type and said attribute; and
in response to receiving an MPD request not including said command, the transmission section (31) transmits the MPD file without transmitting the initialization segment file.

6. The information processing apparatus according to claim 5, further comprising:
a selection section that selects an encoding bitrate of a subsequent content that is the content having an encoding bitrate selected within an allowable range by the information processing apparatus and having reproduction clock time later than predetermined reproduction clock time from encoding bitrates within the allowable range on a basis of a file of the content having a predetermined encoding bitrate and the predetermined reproduction clock time, content file request information requesting the information processing apparatus to transmit a file of the subsequent content, and a network bandwidth,
wherein the information processing apparatus is configured such that the transmission section transmits the file of the content having the predetermined encoding bitrate and the predetermined reproduction clock time and the file of the subsequent content having the encoding bitrate selected by the selection section.

7. The information processing apparatus according to claim 6,
wherein the information processing apparatus is configured such that
the file is a media segment file, and
the content file request information includes range information that indicates the allowable range.

8. The information processing apparatus according to any of claims 3 and 7,
wherein the information processing apparatus is configured such that
the content file request information includes information that indicates a time period of the subsequent content.

9. The information processing apparatus according to any of claims 1 and 5,
wherein the information processing apparatus is configured such that
a kind of the attribute is at least one of an encoding bitrate, a language, a role, a resolution, a sampling rate, a frame rate, and the number of channels of the content.

10. The information processing apparatus according to any of claims 1 and 5,
wherein the information processing apparatus is configured such that
the transmission section performs transmission conforming to either an HTTP (HyperText Transfer Protocol)/2 or a WebSocket protocol.

11. An information processing method comprising:
a receiving step of receiving an MPD (Media Presentation Description) request with a header including a command assigning a media type and attributes for an initialization segment file; and
a transmission step performed by an information processing apparatus (11), the transmission step comprising transmitting (S13), in response to receiving (S41) the MPD request including said command, an MPD file that manages a content possessing a plurality of attributes and the initialization segment file of the content possessing said media type and said attribute; and
in response to receiving an MPD request not including said command, the MPD file is transmitted without transmitting the initialization segment file.

## Patentansprüche

1. Informationsverarbeitungseinrichtung (12), umfassend:
einen Anforderungserzeugungsabschnitt (50), der einen Befehl erzeugt, der einen Medientyp und ein Medienattribut für eine Initialisierungssegmentdatei zuweist und eine MPD-Anforderung (Media Presentation Description-Anforderung) mit einem Header, die den Befehl einschließt, erzeugt; und
einen Übertragungsabschnitt (51), der die MPD-Anforderung, die den Befehl einschließt, von einer verschiedenen Informationsverarbeitungseinrichtung (11) ein Übertragen einer MPD-Datei, die einen Inhalt verwaltet, der eine Vielzahl von Attributen besitzt, und der Initialisierungssegmentdatei des Inhalts, der den Medientyp und das Medienattribut besitzt, anzufordern, überträgt;
wobei, wenn der Anforderungserzeugungsabschnitt (50) eine MPD-Anforderung, die den Befehl nicht einschließt, erzeugt, der Übertragungsabschnitt (51) die MPD-Anforderung, die den Befehl nicht einschließt, zum Anfordern, dass die verschiedene Informationsverarbeitungseinrichtung (11) die MPD-Datei überträgt, ohne die Initialisierungssegmentdatei zu übertragen, überträgt.

2. Informationsverarbeitungseinrichtung nach Anspruch 1, wobei die Informationsverarbeitungseinrichtung derart angeordnet ist, dass
der Übertragungsabschnitt Inhaltsdateianforderungsinformationen zum Anfordern von der verschiedenen Informationsverarbeitungseinrichtung, eine Datei des Inhalts mit einer vorbestimmten Codierungsbitrate und einer vorbestimmten Wiedergabetaktzeit und eine Datei eines nachfolgenden Inhalts, der der Inhalt mit einer Codierungsbitrate, die durch die verschiedene Informationsverarbeitungseinrichtung innerhalb eines zulässigen Bereichs ausgewählt wird, und mit einer Wiedergabetaktzeit, die später als die vorbestimmte Wiedergabetaktzeit ist, ist, zu übertragen, überträgt.

3. Informationsverarbeitungseinrichtung nach Anspruch 2, wobei die Informationsverarbeitungseinrichtung derart angeordnet ist, dass
die Datei eine Mediensegmentdatei ist und
die Inhaltsdateianforderungsinformationen Bereichsinformationen, die den zulässigen Bereich angeben, einschließen.

4. Informationsverarbeitungsverfahren, umfassend:
einen Erzeugungsschritt zum Erzeugen eines Befehls, der einen Medientyp und ein Medienattribut für eine Initialisierungssegmentdatei zuweist und eine MPD-Anforderung (Media Presentation Description-Anforderung) mit einem Header, die den Befehl einschließt, erzeugt; und
einen Übertragungsschritt (S12) zum, durch eine Informationsverarbeitungseinrichtung (12), Übertragen der MPD-Anforderung, die den Befehl einschließt, von einer verschiedenen Informationsverarbeitungseinrichtung (11) ein Übertragen einer MPD-Datei, die einen Inhalt verwaltet, der eine Vielzahl von Attributen besitzt, und der Initialisierungssegmentdatei des Inhalts, der den Medientyp und das Medienattribut besitzt, anzufordern; wobei, wenn eine MPD-Anforderung, die den Befehl nicht einschließt, die MPD-Anforderung, die den Befehl nicht einschließt, zum Anfordern, dass die verschiedene Informationsverarbeitungseinrichtung (11) die MPD-Datei überträgt, ohne die Initialisierungssegmentdatei zu übertragen, übertragen wird.

5. Informationsverarbeitungseinrichtung (11), umfassend:
einen Übertragungsabschnitt (31), der eine MPD-Anforderung (Media Presentation Description-Anforderung) mit einem Header, der einen Medientyp und ein Medienattribut für eine Initialisierungssegmentdatei zuweist, einschließt, von einer verschiedenen Informationsverarbeitungseinrichtung (12) empfängt;
wobei der Übertragungsabschnitt, als Reaktion auf das Empfangen der MPD-Anforderung, die den Befehl einschließt, eine MPD-Datei, die einen Inhalt verwaltet, der eine Vielzahl von Attributen besitzt, und der Initialisierungssegmentdatei des Inhalts, der den Medientyp und das Medienattribut besitzt, überträgt; und als Reaktion auf das Empfangen einer MPD-Anforderung, die den Befehl nicht einschließt, der Übertragungsabschnitt (31) die MPD-Datei überträgt, ohne die Initialisierungssegmentdatei zu übertragen.

6. Informationsverarbeitungseinrichtung nach Anspruch 5, ferner umfassend:
einen Auswahlabschnitt, der eine Codierungsbitrate eines nachfolgenden Inhalts, der der Inhalt mit einer Codierungsbitrate, die durch die verschiedene Informationsverarbeitungseinrichtung innerhalb eines zulässigen Bereichs ausgewählt wird, und mit einer Wiedergabetaktzeit, die später als die vorbestimmte Wiedergabetaktzeit ist, aus Codierungsbitraten innerhalb des zulässigen Bereichs basierend auf einer Datei des Inhalts mit einer vorbestimmten Codierungsbitrate und der vorbestimmten Wiedergabetaktzeit, Inhaltsdateianforderungsinformationen, die von der Informationsverarbeitungseinrichtung ein Übertragen einer Datei des nachfolgenden Inhalts anfordern, und eine Netzwerkbandbreite auswählt,
wobei die Informationsverarbeitungseinrichtung derart angeordnet ist, dass der Übertragungsabschnitt die Datei des Inhalts mit der vorbestimmten Codierungsbitrate und der vorbestimmten Wiedergabetaktzeit und die Datei des nachfolgenden Inhalts mit der durch den Auswahlabschnitt ausgewählten Codierungsbitrate überträgt.

7. Informationsverarbeitungseinrichtung nach Anspruch 6, wobei die Informationsverarbeitungseinrichtung derart angeordnet ist, dass
die Datei eine Mediensegmentdatei ist und
die Inhaltsdateianforderungsinformationen Bereichsinformationen, die den zulässigen Bereich angeben, einschließen.

8. Informationsverarbeitungseinrichtung nach einem der Ansprüche 3 und 7,
wobei die Informationsverarbeitungseinrichtung derart angeordnet ist, dass
die Inhaltsdateianforderungsinformationen Informationen, die einen Zeitraum des nachfolgenden Inhalts angeben, einschließen.

9. Informationsverarbeitungseinrichtung nach einem der Ansprüche 1 und 5,
wobei die Informationsverarbeitungseinrichtung derart angeordnet ist, dass
eine Art des Attributs zumindest eines von einer Codierungsbitrate, einer Sprache, einer Rolle, einer Auflösung, einer Abtastrate, einer Bildrate und der Anzahl von Kanälen des Inhalts ist.

10. Informationsverarbeitungseinrichtung nach einem der Ansprüche 1 und 5,
wobei die Informationsverarbeitungseinrichtung derart angeordnet ist, dass
der Übertragungsabschnitt eine Übertragung entsprechend entweder einem HTTP/2-Protokoll (HyperText Transfer Protocol/2-Protokoll) oder einem WebSocket-Protokoll durchführt.

11. Informationsverarbeitungsverfahren, umfassend:
einen Empfangsschritt zum Empfangen einer MPD-Anforderung (Media Presentation Description-Anforderung) mit einem Header, der einen Medientyp und Medienattribute für eine Initialisierungssegmentdatei zuweist; und
einen Übertragungsschritt, der durch eine Informationsverarbeitungseinrichtung (11) durchgeführt wird, der Übertragungsschritt umfassend ein Übertragen (S13), als Reaktion auf das Empfangen (S41) der MPD-Anforderung, die den Befehl einschließt, einer MPD-Datei, die einen Inhalt verwaltet, der eine Vielzahl von Attributen besitzt, und der Initialisierungssegmentdatei des Inhalts, der den Medientyp und das Medienattribut besitzt; und
wobei als Reaktion auf das Empfangen einer MPD-Anforderung, die den Befehl nicht einschließt, die MPD-Datei übertragen wird, ohne die Initialisierungssegmentdatei zu übertragen.

## Revendications

1. Appareil de traitement d'informations (12) comprenant :
une section de génération de requête (50) qui génère une commande attribuant un type de média et un attribut à un fichier de segments d'initialisation, et qui génère une requête de description de présentation multimédia (MPD) comportant une en-tête incluant la commande, et
une section de transmission (51) qui transmet la requête de description MPD incluant la commande pour demander à un appareil différent de traitement d'informations (11) de transmettre un fichier de description MPD qui gère un contenu possédant une pluralité d'attributs et le fichier de segments d'initialisation du contenu possédant ledit type de média et ledit attribut,
dans lequel, lorsque la section de génération de requête (50) génère une requête de description MPD n'incluant pas ladite commande, la section de transmission (51) transmet la requête de description MPD n'incluant pas ladite commande afin de demander que l'appareil différent de traitement d'informations (11) transmette ledit fichier de description MPD sans transmettre le fichier de segments d'initialisation.

2. Appareil de traitement d'informations selon la revendication 1,
l'appareil de traitement d'informations étant configuré de sorte à ce que :
la section de transmission transmette des informations de requête de fichier de contenu afin de demander à l'appareil différent de traitement d'informations de transmettre un fichier du contenu comportant un débit binaire de codage prédéterminé et un temps d'horloge de reproduction prédéterminé, ainsi qu'un fichier de contenu suivant qui représente le contenu comportant un débit binaire de codage sélectionné dans une plage admissible par l'appareil différent de traitement d'informations et comportant un temps d'horloge de reproduction ultérieur au temps d'horloge de reproduction prédéterminé.

3. Appareil de traitement d'informations selon la revendication 2,
l'appareil de traitement d'informations étant configuré de sorte à ce que :
le fichier soit un fichier de segments multimédias, et
les informations de requête de fichier de contenu incluent des informations de plage qui indiquent la plage admissible.

4. Procédé de traitement d'informations comprenant :
une étape de génération consistant à générer une commande attribuant un type de média et un attribut à un fichier de segments d'initialisation, et à générer une requête de description de présentation multimédia (MPD) comportant une en-tête incluant la commande, et
une étape de transmission (S12) par un appareil de traitement d'informations (12) consistant à transmettre la requête de description MPD incluant ladite commande pour demander à un appareil différent de traitement d'informations (11) de transmettre un fichier de description MPD qui gère un contenu possédant une pluralité d'attributs et le fichier de segments d'initialisation du contenu possédant ledit type de média et ledit attribut,
dans lequel, lorsqu'une requête de description MPD n'incluant pas ladite commande est générée, la requête de description MPD n'incluant pas ladite commande est transmise afin de demander que l'appareil différent de traitement d'informations (11) transmette ledit fichier de description MPD sans transmettre le fichier de segments d'initialisation.

5. Appareil de traitement d'informations (11) comprenant :
une section de transmission (31) qui reçoit une requête de description de présentation multimédia (MPD) comportant une en-tête incluant une commande attribuant un type de média et un attribut à un fichier de segments d'initialisation issu d'un appareil différent de traitement d'informations (12),
dans lequel la section de transmission transmet, en réponse à la réception de la requête de description MPD incluant ladite commande, un fichier de description MPD qui gère un contenu possédant une pluralité d'attributs et le fichier de segments d'initialisation du contenu possédant ledit type de média et ledit attribut, et
en réponse à la réception d'une requête de description MPD n'incluant pas ladite commande, la section de transmission (31) transmet le fichier de description MPD sans transmettre le fichier de segments d'initialisation.

6. Appareil de traitement d'informations selon la revendication 5, comprenant en outre :
une section de sélection qui sélectionne un débit binaire de codage d'un contenu suivant qui représente le contenu comportant un débit binaire de codage sélectionné dans une plage admissible par l'appareil de traitement d'informations et comportant un temps d'horloge de reproduction ultérieur au temps d'horloge de reproduction prédéterminé à partir de débits binaires de codage se trouvant dans la plage admissible sur la base d'un fichier du contenu comportant un débit binaire de codage prédéterminé et le temps d'horloge de reproduction prédéterminé, des informations de requête de fichier de contenu demandant à l'appareil de traitement d'informations de transmettre un fichier du contenu suivant et la bande passante du réseau,
dans lequel l'appareil de traitement d'informations est configuré de sorte à ce que la section de transmission transmette le fichier du contenu comportant le débit binaire de codage prédéterminé et le temps d'horloge de reproduction prédéterminé ainsi que le fichier du contenu suivant comportant le débit binaire de codage sélectionné par la section de sélection.

7. Appareil de traitement d'informations selon la revendication 6,
l'appareil de traitement d'informations étant configuré de sorte à ce que :
le fichier soit un fichier de segments multimédias, et
les informations de requête de fichier de contenu incluent des informations de plage qui indiquent la plage admissible.

8. Appareil de traitement d'informations selon l'une quelconque des revendications 3 et 7,
l'appareil de traitement d'informations étant configuré de sorte à ce que :
les informations de requête de fichier de contenu incluent des informations qui indiquent une période de temps du contenu suivant.

9. Appareil de traitement d'informations selon l'une quelconque des revendications 1 et 5,
l'appareil de traitement d'informations étant configuré de sorte à ce que :
le type de l'attribut soit au moins l'un parmi un débit binaire de codage, une langue, un rôle, une résolution, un débit d'échantillonnage, un débit de trame et le nombre de canaux du contenu.

10. Appareil de traitement d'informations selon l'une quelconque des revendications 1 et 5,
l'appareil de traitement d'informations étant configuré de sorte à ce que :
la section de transmission effectue une transmission conforme soit à un protocole de transfert hypertexte (HTTP) / 2, soit à un protocole Websocket.

11. Procédé de traitement d'informations comprenant :
une étape de réception consistant à recevoir une requête de description de présentation multimédia (MPD) comportant une en-tête incluant une commande attribuant un type de média et un attribut à un fichier de segments d'initialisation, et
une étape de transmission effectuée par un appareil de traitement d'informations (11), l'étape de transmission comprenant la transmission (S13), en réponse à la réception (S41) de la requête de description MPD incluant ladite commande, d'un fichier de description MPD qui gère un contenu possédant une pluralité d'attributs et le fichier de segments d'initialisation du contenu possédant ledit type de média et ledit attribut, et
en réponse à la réception d'une requête de description MPD n'incluant pas ladite commande, le fichier de description MPD est transmis sans transmettre le fichier de segments d'initialisation.
